(19) Europäisches Patentamt / European Patent Office / Office européen des brevets

(11) **EP 4 335 538 A1**

(12) **EUROPEAN PATENT APPLICATION**

(43) Date of publication:
**13.03.2024 Bulletin 2024/11**

(51) International Patent Classification (IPC):
**B01D 67/00** (2006.01)    **B01D 46/54** (2006.01)
**B01D 69/02** (2006.01)    **B01D 71/36** (2006.01)

(21) Application number: **23209994.5**

(22) Date of filing: **13.10.2020**

(52) Cooperative Patent Classification (CPC):
**B01D 71/36; B01D 67/0027; B01D 69/02;**
B01D 2325/06

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.12.2019 US 201962947755 P**

(62) Document number(s) of the earlier application(s) in accordance with Art. 76 EPC:
**20801072.8 / 4 072 714**

(71) Applicant: **W. L. Gore & Associates, Inc.**
**Newark, DE 19711 (US)**

(72) Inventors:
• **PARSONS, Bernadette**
**Newark, 19711 (US)**
• **HOLLENBAUGH, Donald, L., Jr.**
**Newark, 19711 (US)**

(74) Representative: **HGF**
**HGF Limited**
**1 City Walk**
**Leeds LS11 9DX (GB)**

Remarks:
This application was filed on 15-11-2023 as a divisional application to the application mentioned under INID code 62.

(54) **POROUS POLYTETRAFLUOROETHYLENE MEMBRANE HAVING A MACRO-TEXTURED SURFACE AND METHOD FOR MAKING THE SAME**

(57) Compositions and methods directed to the production of single layer, highly porous, free-standing polytetrafluoroethylene (PTFE) membranes having macro-textured surfaces are provided. The macro-textured surfaces are due to the presence of macroscopic nodal aggregates within the membrane that are connected by fibrils The membranes have high porosity, high airflow, and a bulk density less than 1.0 g/cm$^3$. Articles comprising the porous, single layer PTFE membranes are also provided.

FIG. 1

EP 4 335 538 A1

**Description**

**FIELD**

The present invention relates generally to single layer, free-standing, highly porous polytetrafluoroethylene (PTFE) membranes having a macro-textured surface due to the presence of elongated strands of macroscopic nodal aggregates.

**BACKGROUND**

A conventional method of manufacturing expanded PTFE (ePTFE) layer is described in U.S. Patent No. 3,953,566 to Gore. In the method described therein, a PTFE paste is formed by combining a PTFE resin and a lubricant. The PTFE paste is then extruded. After the lubricant is removed from the extruded paste, the PTFE article is stretched to create a porous, high strength PTFE article. The expanded PTFE article is characterized by a porous, open microstructure that has nodes interconnected by fibrils.

ePTFE articles with a variety of microstructures of nodes and fibrils are known in the art. Some such ePTFE articles are described in, for example, U.S. Patent No. 4,902,423 to Bacino; U.S. Patent No. 5,814,405 to Branca, et al.; U.S. Patent No. 5,476,589 to Bacino; and U.S. Patent No. 6,342,294 to Ruefer, et al. However, ePTFE articles with having macrostructures are not described in these documents.

U.S. Patent Publication No. 2016/0367947A1 to Hollenbaugh et al. discloses the preparation of asymmetric polytetrafluoroethylene composites having macro-textured surfaces. U.S. Patent No. 7,306,841 to Ruefer et al. discloses asymmetric polytetrafluoroethylene composite articles having a plurality of nodal aggregates separated by relatively long fibrils. In both documents, the disclosed articles are structurally asymmetric composites (e.g., having different densities, microstructures, etc.) in the z-axis as the asymmetric composites are produced by stacking and co-expanding laminates comprised of PTFE tapes having different expansion characteristics.

Applications such as scaffolding for tissue in-growth, scaffolding for seeding materials such prokaryotic and eukaryotic cells, spores, and seeds; and high airflow filtration applications may benefit from single layer, free-standing, highly porous expanded polytetrafluoroethylene membranes having macro-textured surfaces/features. Thus, a need exists for such materials.

**SUMMARY**

Single layer, free-standing, highly porous polytetrafluoroethylene (PTFE) membranes are provided having a macro-textured surface comprised of long strands of macroscopic nodal aggregates connected by a plurality of long fibrils. Methods to make as well as articles comprising the present membranes are also provided.

According to one aspect ("Aspect 1"), a porous polytetrafluoroethylene (PTFE) membrane includes a) a first side and a second side, b) a thickness of at least 25 $\mu$m; c) a bulk density of 1.0 g/cm$^3$ or less; d) a porosity of at least 50%; e) an airflow rate at least 200 L/hour (L/hr) as measured under a differential pressure of 12 millibar (1.2 kPa) over a surface area of approximately 2.99 cm$^2$; and f) a macro-textured surface on the first or the second side due to the presence of a plurality of spaced macroscopic nodal aggregates within the porous membrane, where adjacent macroscopic nodal aggregates are connected by a population of long PTFE fibrils, where the macroscopic nodal aggregates include a plurality of dense PTFE nodes having a density ranging from 2.0 g/mol to 2.2 g/mol; where i) the average distance between the macroscopic nodal aggregates is at least 30 $\mu$m; ii) the top quartile average distance between the macroscopic nodal aggregates is at least 100 $\mu$m; and iii) an average width of the spaced macroscopic nodal aggregates ranging from 10 $\mu$m to 200 $\mu$m; where at least a portion of the plurality of the spaced macroscopic nodal aggregates extend from the first side to the second side of the porous PTFE membrane; and where the PTFE membrane is both a single layer and free-standing.

According to another aspect, (Aspect "2") further to Aspect 1, a majority of the macroscopic nodal aggregates extend from the first side of the porous PTFE membrane to the second side of the porous PTFE membrane.

According to another aspect, (Aspect "3") further to any preceding aspect, the macroscopic nodal aggregates have a density that is less than the density of the PTFE nodes.

According to another aspect, (Aspect "4") further to any preceding aspects, the macroscopic nodal aggregates form strands on the first or the second side of the porous PTFE membrane that have a length of at least 0.5 cm.

According to another aspect, (Aspect "5") further to Aspect 4, the strands are formed of one or more microscopic gaps connected by a population of short PTFE fibrils that are less than 120 $\mu$m in length.

According to another aspect, (Aspect "6") further to any preceding aspects, the porous PTFE membrane is substantially symmetric from the first side to the second side.

According to another aspect, (Aspect "7"), an article includes the porous PTFE membrane of any preceding aspects.

According to another aspect, (Aspect "8") further to Aspect 7, the article is a vent, a filter, an implantable medical device, a scaffold for tissue in-growth, a scaffold for growing prokaryotic or eukaryotic cells, a scaffold for growing spores, a scaffold for growing plants, or a garment.

According to another aspect, (Aspect "10"), a method of making a single layer, free-standing, porous polytetrafluorethylene membrane having a macro-textured surface includes a) providing a first layer including a first PTFE membrane having a matrix tensile strength of less than 800 pounds force per square inch (psi) (5.52 MPa) in both the machine direction and the transverse direction; and ii) a second layer that includes a second PTFE membrane having a matrix tensile strength greater than 800 psi (5.52 MPa) in both the machine direction and the transverse direction; b) stacking the first PTFE membrane on top of the second PTFE membrane; c) applying a suitable amount of pressure, heat or combination thereof to non-permanently bond the first PTFE membrane to the second PTFE membrane to form a layered product; d) expanding the layered product at least once in the machine direction and at least once in the transverse direction; e) separating the second layer from the first layer; where the first layer is a single layer porous PTFE membrane; f) optionally subject single layer porous PTFE membrane to at least one additional expanding step; and g) subjecting the single layer porous PTFE membrane to at least one heat treatment under suitable conditions to at least partially sinter the single layer porous PTFE membrane.

According to another aspect, (Aspect "10") further to any preceding aspects, the expanding step d) including a first machine direction expansion prior to a first transverse expansion.

According to another aspect, (Aspect "11") further to Aspect 10, the first machine direction expansion including an expansion ratio of 1.1:1 to 1.7:1.

According to another aspect, (Aspect "12") further to any preceding aspects, the step d) or step e) comprises biaxial expansion, uniaxial expansion, radial expansion or any combination thereof.

According to another aspect, (Aspect "13") further to any preceding aspects, biaxial expansion is sequential biaxial expansion, simultaneous biaxial expansion or a combination thereof.

According to another aspect, (Aspect "14") further to any preceding aspects, the at least one additional expanding step in step f) is biaxial expansion, uniaxial expansion, radial expansion or any combination thereof.

According to another aspect, (Aspect "15") further to any preceding aspects, the carrier layer is subjected to at least one uniaxial, biaxial or radial expansion step prior to stacking the carrier layer on the precursor layer.

According to another aspect, (Aspect "16") further to any preceding aspects, the heat treatment comprises a temperature of 345°C to 390°C for no more than 10 minutes.

According to another aspect, (Aspect "17") further to any preceding aspects, the method further includes densifying the single layer porous PTFE membrane.

According to another aspect, (Aspect "18") further to Aspect 17, the densifying is before, during or after the at least one heat treatment.

According to another aspect, (Aspect "19") further to any preceding aspects, the method further includes contacting the heat-treated single layer porous membrane with at least one coating composition.

According to another aspect, (Aspect "20") further to any preceding aspects, the method may further includes contacting the heat-treated single layer porous membrane with a surface modification treatment.

According to another aspect, (Aspect "21") further to any preceding aspects, the method further includes laminating or bonding the heat-treated single layer porous membrane to at least one additional material.

According to another aspect, (Aspect "22") further to Aspect 21, the at least one additional is not PTFE.

**BRIEF DESCRIPTION OF THE DRAWINGS**

The accompanying drawings are included to provide a further understanding of the disclosure and are incorporated in and constitute a part of this specification, illustrate embodiments, and together with the description serve to explain the principles of the disclosure.

FIG. 1 is a light microscope surface image of the porous membrane prepared in Example 1 in accordance with some embodiments;
FIG. 2 is a light microscope cross-section image of the porous membrane prepared in Example 1 in accordance with some embodiments;
FIG. 3 is a scanning electron microscope (SEM) surface image of the porous membrane surface prepared in Example 1 in accordance with some embodiments;
FIG. 4 is an SEM cross-section image of the porous PTFE membrane prepared in Example 1 in accordance with some embodiments;
FIGS. 5A, 5B, and 5C are SEMs of the surface of the porous PTFE membrane prepared in Example 3 at different magnifications in accordance with some embodiments;

FIG. 6 is an SEM cross-section image of the porous membrane PTFE prepared in Example 3 in accordance with some embodiments;

FIGS. 7A, 7B, 7C, and 7D are SEMs of the surface of the porous membrane prepared in Example 4 at different magnifications in accordance with some embodiments;

FIG. 8 is an SEM cross-section image of the porous membrane prepared in Example 4 in accordance with some embodiments;

FIG. 9 is a diagram illustrating the process used to prepare the present membranes in accordance with some embodiments;

FIG. 10 is an illustration showing cross-sectional features of the present membranes in accordance with some embodiments;

FIG. 11A is a schematic illustration depicting the determination of solid feature spacing where three neighboring solid features represent the corners of a triangle whose circumcircle has an interior devoid of additional solid features and the solid feature spacing is the straight distance between two of the solid features forming the triangle in accordance with some embodiments described herein;

FIG. 11B is a schematic illustration depicting the determination of non-neighboring solid features where the solid features form the corners of a triangle whose circumcircle contains at least one additional solid feature in accordance with some embodiments described herein; and

FIG. 12 is an SEM showing the quantitative image analysis (QIA) using a plurality of parallel lines (1210) used to calculate the spacing of the macroscopic nodal agglomerates.

## DETAILED DESCRIPTION

Persons skilled in the art will readily appreciate that various aspects of the present disclosure can be realized by any number of methods and apparatus configured to perform the intended functions. It should also be noted that the accompanying figures referred to herein are not necessarily drawn to scale, but may be exaggerated to illustrate various aspects of the present disclosure, and in that regard, the figures should not be construed as limiting.

The present disclosure is directed to single layer, free-standing, highly porous polytetrafluoroethylene (PTFE) membranes having macro-textured surfaces formed of nodal macrostructures (e.g., macroscopic nodal aggregates) capable of being optically observed. A plurality of the macroscopic nodal aggregates extend across the entire thickness (e.g., z-direction) of the membrane, and are connected by a plurality of fibrils (i.e., a population of "long" fibrils). It is to be appreciated that the terms "porous PTFE membrane" and "ePTFE membrane" are used interchangeably herein.

As used herein, the terms "comprises," "comprise", "comprising," "includes,", "include", "including," "has," "having," "contains", "contain", or "containing," are intended to cover a non-exclusive inclusion. For example, a composition, process, method, article, or apparatus that comprises a list of elements is not necessarily limited to only those elements but may include other elements not expressly listed or inherent to such composition, process, method, article, or apparatus.

The transitional phrase "consisting of" excludes any element, step, or ingredient not specifically identified. If the phrase is used in the claim, such a phrase would close the claim to exclude materials other than those recited except for impurities ordinarily associated therewith. When the phrase "consisting of" appears in a clause of the body of a claim, rather than immediately following the preamble, it limits only the element set forth in that clause; other elements are not excluded from the claim as a whole.

When an amount, concentration, or other value or parameter is given as either a range, a preferred range, or a list of upper preferable values and lower preferable values, it is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range.

As used herein, the term "optically observed" is meant to denote that an object can be observed with the use of an optical microscope and/or with the naked eye.

As used herein, the term "on" is meant to denote an element, such as a polytetrafluoroethylene (PTFE) membrane, is directly on another element or intervening elements may also be present.

As used herein, the terms "biaxial" or "biaxially oriented" are meant to describe a polymer, membrane, preform, or article that is expanded in at least two directions, either simultaneously or sequentially. The ratio of the matrix tensile strength (MTS) in two orthogonal directions (i.e., longitudinal/machine vs. transverse; x/y planes) may be used to describe the relative "balance" of a biaxially oriented membrane. Balanced membranes typically exhibit MTS ratios of about 2:1 or less.

As used herein, the term "lubricant" is meant to describe a processing aid that includes, and in some embodiments, consists of, an incompressible fluid that is not a solvent for the polymer at processing conditions. The fluid-polymer surface interactions are such that it is possible to create a homogenous mixture.

As used herein, the term "wet state" is meant to describe a PTFE membrane that has not been dried to remove lubricant.

The term "dry state" as used herein is meant to describe a PTFE membrane that has been dried to remove lubricant.

"Fine powder PTFE" as used herein is meant to denote that the PTFE resin was prepared by an aqueous dispersion polymerization technique.

As used herein, the x- , y- or z-direction is meant to refer to a Cartesian coordinate 3-D system. When referring to an expanded membrane, the "x- direction" and "y-direction" are meant to denote longitudinal (i.e., machine) and transverse directions, respectively. The term "z-direction" is meant to refer to direction perpendicular to the plane formed from the orthogonal x- and y-directions. The z-direction may be used to describe features associated with the thickness of a biaxially oriented membrane.

As used herein, the term "free-standing" is meant to refer to a highly porous single layer PTFE membrane of the present disclosure that has sufficient mechanical strength such that it does not require additional structural support (e.g., such as a backing or a support layer) for use in desired applications.

As used herein, the term "average engineering strain rate" is the average rate of expansion of a material throughout the time of expansion assuming either a constant rate or an accelerating rate during expansion. Specifically, the strain rate is defined as the additional strain induced on the material divided by the total time in which that strain is induced (%/second):

$$[\text{Final length } (l_f) - \text{Initial length } (l_o)] / \text{Initial length } (l_o) = \text{strain } \varepsilon$$

$$\text{Strain rate} = \text{strain } \varepsilon / \text{time } (t)$$

As used herein, the term "macro-textured surface" refers to optically observable macroscopic nodal aggregates having the appearance of extended macroscopic strands on the surface(s) of the porous PTFE membranes disclosed herein.

As used herein, the term "highly porous" refers to relative porosity of a porous PTFE membrane described herein where the membrane has a porosity of at least 50%. The porous PTFE membranes described herein have a porosity of at least about 50%, at least about 60%, at least about 70%, at least about 75%, at least about 80%, or at least about 85%. Due to the large pore size and high porosity, the porous PTFE membranes described herein have high ATEQ airflow rates. In some embodiments, the porous PTFE membranes have an ATEQ airflow rate (@ 12 mbar (1.2 kPa) differential pressure using a surface area of about 2.99 $cm^2$) of least 200 L/hr, at least 300 L/hr, from about 300 L/hr to about 5000 L/hr, from about 300 L/hr to about 2000 L/hr, from about 300 L/hr to about 1700 L/hr, or from about 300 L/hr to about 1500 L/hr.

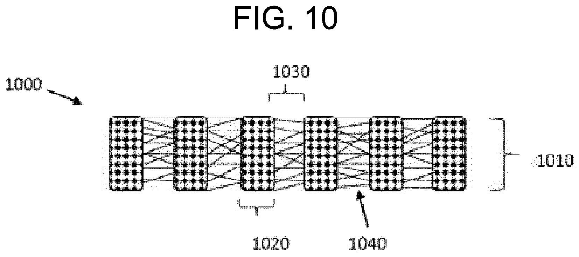

As used herein, the terms "macroscopic nodal aggregates" and "nodal macrostructures" are used interchangeably to refer to the macroscopic structures within the porous PTFE membranes that are formed of (1) a plurality of PTFE nodes having a density of about 2.0 g/cc to about 2.2 g/cc aggregated into a macroscopic structure having an average density less than that of the individual PTFE nodes, (2) an average width within the ranges described herein, and (3) an average length within the ranges described herein FIG. 10 provides an illustration showing the elements of a cross-section view of porous PTFE membranes described herein. The membrane cross-section (1000) shows the presence of a plurality of macroscopic nodal aggregates (1020) spanning the width of the membrane (1010). The majority of macroscopic nodal aggregates of the porous PTFE membranes will extend from the first membrane surface through the z-axis (width; 1010) to the second membrane surface (opposing side of the membrane) and are connected by a plurality of long fibrils (1040). The nodes within the nodal aggregates will be closely spaced and may be connected by a plurality of shorter fibrils (shorter being relative to the longer fibrils connecting two or more macroscopic nodal aggregates).

In some embodiments, the porous PTFE membranes have some nodal structures that fail to meet the size and length parameters set forth herein for the macroscopic nodal aggregates. In some embodiments, a majority of the macroscopic nodal aggregates extend across the entire thickness of the membrane. As used herein, the term "majority of macroscopic nodal aggregates" means that more than about 50% of the macroscopic nodal aggregates (as defined herein) extend across the entire thickness of the porous PTFE membranes, at least about 60%, at least about 70%, at least about 80%, at least about 90% or at least about 95% of the porous PTFE membrane.

Long strands of the macroscopic nodal aggregates are optically observable on the surface of the porous PTFE membranes. In some embodiments, the macroscopic strands may include narrow gaps/fractures perpendicular to the length of the strand where a plurality of short PTFE fibrils bridge the narrow gaps connecting the macroscopic nodal aggregates into an extended strand that is optically observable as the macro-textured surface characteristic of the porous PTFE membranes.

The adjacent microscopic nodal aggregates are separated by varying distances. Qualitative image analysis (QIA) (method described below) was used to generate a distribution of distance measurements. Statistical analysis was performed on the distribution. The QIA distance data was not normally distributed. As such, both the overall average distance (based on all distances measured) and the average distance based on the top quartile of the distribution (i.e., bottom 75% of data point excluded) were determined for each membrane sample to better characterize the macroscopic features. The (overall) average distance between the macroscopic nodal aggregates (1030) (as measured by qualitative image analysis (QIA) methodology described herein) is at least about 30 $\mu$m, or at least about 40 $\mu$m. In one aspect, the average distance between macroscopic nodal aggregates is from about 30 $\mu$m to about 1000 $\mu$m, from about 40 $\mu$m to about 500 $\mu$m, or from about 40 $\mu$m to about 300 $\mu$m. The top quartile (top 25%) average distance between macroscopic nodal aggregates is at least about 100 $\mu$m, from about 100 $\mu$m to about 3 mm, from about 100 $\mu$m to about 2000 $\mu$m, or from about 100 $\mu$m to about 1000 $\mu$m.

In another embodiment, the plurality of long fibrils (1040) connecting the macroscopic nodal aggregates have an average length from about 30 $\mu$m to about 3 mm, preferably from about 100 $\mu$m to about 3 mm, from about 500 $\mu$m to about 2 mm, and or from about 500 $\mu$m to about 1 mm.

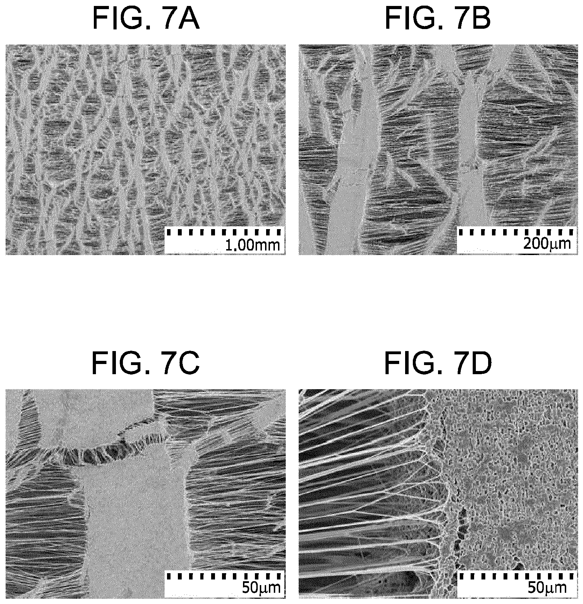

The average width of the macroscopic nodal aggregates (1020) may range from about 10 $\mu$m to about 200 $\mu$m, from about 10 $\mu$m to about 100 $\mu$m, or from about 10 $\mu$m to about 50 $\mu$m. The macroscopic nodal aggregates characteristically form the long strands in the x-axis or y-axis (depending upon your chosen expansion protocol) which are optically visible as extended strands on the surfaces of the porous PTFE membranes (see, *for example,* FIGS. 7A and 7B). In some embodiments, the average length of the nodal aggregate strand (as optically observed) is at least about 0.5 cm, at least about 1.0 cm, or at least about 1.5 cm. In some embodiments, the macroscopic strands may include microscopic gaps or fractures (typically perpendicular to the direction of strands) connected by a plurality of short fibrils (see, *for example,* FIG. 7C). These microscopic fractures/gaps typically do not alter the optical appearance of the strands and are not taken into consideration when describing the average length of the macroscopic strands. The population of short fibrils connecting the microscopic gaps/fractures (when present) will typically be no more than about 120 $\mu$m in length, from about 1 $\mu$m to about 50 $\mu$m in length, or from about 5 $\mu$m to about 40 $\mu$m in length.

As used herein, the terms "precursor tape", "precursor membrane", "PTFE precursor tape", and "precursor layer" are used interchangeably and refer to the initial PTFE membrane that accounts for the majority of the mass in the PTFE membranes of the present disclosure. The precursor membrane typically is a PTFE membrane designed to be highly expandable relative (i.e., a weaker membrane) to the expansion characteristics of the PTFE carrier layer membrane (i.e., a stronger membrane). The precursor membrane may begin as a single layer membrane that has been extruded and calendared or may be formed from a plurality of membranes that are stacked and then calendared under sufficient conditions to durably bond them into a coherent single membrane suitable for use in the process disclosed herein. The precursor membranes are relatively weak and are designed to have a matrix tensile strength (MTS) of less than 800 psi (<~5.52 MPa) in both the machine direction (MD) and transverse direction (TD).

As used herein, the terms "carrier layer", "carrier membrane", "PTFE carrier membrane", and "carrier tape" are used interchangeably and refer to an expandable and fibrillatable polytetrafluoroethylene (i.e., not melt processable) membrane that is reversibly bound (i.e., removable) to the PTFE precursor membrane. The carrier membrane is designed to be much stronger than the precursor membrane, having a matrix tensile strength (MTS) greater than 800 psi (>~5.52 MPa), at least 1000 psi, (~6.89 MPa) at least 1100 psi (~7.58 MPa), or at least 1500 psi (~10.34 MPa) in both the machine direction (MD) and the transverse direction (TD).

In some embodiments, the porous PTFE membranes are substantially symmetric. As used herein, the phrase "substantially symmetric membrane" refers to membranes having similar structural properties (e.g., density, porosity, and micro/macrostructures) from the first side of the membrane to the second (opposing) side of the membrane (i.e., through the z-axis). This is contrasted from expanded PTFE membranes or PTFE composites that have very different structural properties/features on opposing sides of the membrane or composite (such as, for example, open-tight (OT) membranes, which may be referred to as "asymmetric membranes").

In some embodiments, the relative density across the thickness (z-direction) of the present membrane does not substantially change. As such, the porous PTFE membranes are substantially symmetric across the thickness of the membrane. In at least one embodiment, the porous PTFE membrane is substantially symmetric single layer membrane that includes a relative change (the first side of the membrane relative to the opposite side) in density, porosity and/or pore size of about 20% or less, about 10% or less, about 5% or less, or about 1 % or less through the thickness (z-axis), and as such, may be referred to herein as a "symmetric" membrane.

The present membranes have an average thickness of at least about 25 $\mu$m, at least about 50 $\mu$m, at least about 100 $\mu$m, at least about 250 $\mu$m, at least about 500 $\mu$m, at least about 750 $\mu$m, at least about 1000 $\mu$m, or from about 50 $\mu$m up to about 3 mm.

In addition, the porous PTFE membranes have a bulk density of about 1.0 g/cm$^3$ or less; no more than about 0.6 g/cm$^3$, no more than about 0.5 g/cm$^3$, or no more than about 0.4 g/cm$^3$.

In some embodiments, composites and/or laminates that include at least one porous PTFE membrane are also provided. In other embodiments, the porous PTFE membranes may be coated such that the porous PTFE membrane remains porous or such that the porous PTFE membrane becomes non-porous with at least one coating composition, such as, but not limited to, a polymeric or biologic coating. A coating composition can be applied to the porous PTFE membranes by any conventional coating method such as solvent coating, spray coating, spin coating, vapor deposition, atomic layer deposition (ALD), dip coating, or combinations thereof. Additionally, a coating may be applied to the porous PTFE membranes by applying compression with heat between sheets of a component, such as, but not limited to, fluorinated ethylene propylene (FEP), polyfluoroacrylate (PFA), and silicone.

In some embodiments, the coating composition occupies or fills at least a portion of the voids through the thickness of the porous PTFE membranes. The term "voids" is meant to denote the spaces between the nodes and fibrils. Suitable polymers and/or biologic coatings that may be coated onto and/or imbibed into the porous PTFE membranes include, but are not limited to, polyesters, polystyrene, polyamides, polyphthalamides, polyamide-imides, polycarbonates, polyethersulphones, polysulfones, polyphenylenesulfides, liquid crystalline polymers, polyetherketones, polyetheretherketones, polysiloxanes, epoxies, polyurethanes, polyimides, polyetherimides, polyacrylates, polyparaxylylene, terpolymers of tetrafluoroethylene (TFE), VDF (vinylidenefluoride), and HFP (hexafluoropropylene), copolymers of tetrafluoroethylene (TFE) and perfluoroalkylvinylethers (PAVEs), a copolymer of tetrafluoroethylene and perfluoro-2,2-dimethyl-1,3-dioxole, perfluoroalkylvinylethers, perfluoroalkylethers, polyvinylidenefluoride (PVDF), ethylene tetrafluoroethylene (ETFE), polychlorotrifluoroethylene (PCTFE), fluorinated ethylene propylene (FEP), perfluoroalkoxyalkanes (PFA), polyvinyl alcohol (PVA), CBAS®/Heparin coating (commercially available from W.L. Gore & Associates, Inc.), antimicrobial agents, antibodies, pharmaceuticals, biologic entities, vascularization stimulators, and combinations thereof. The amount of coating applied to and/or within the porous PTFE membrane will be dependent upon the desired application.

In some embodiments, the porous PTFE membranes may be surface modified by the application of at least one of: a chemical treatment, a plasma treatment, or a laser treatment.

In some embodiments, articles that include one or more of the porous PTFE membranes are also provided. In at least one embodiment, the article is a vent, a filter, a garment, an implantable medical device, a scaffold for tissue ingrowth, a scaffold for growing prokaryotic or eukaryotic cells, a scaffold for growing spores, a scaffold for growing plants.

Process to Make the Porous PTFE Membranes

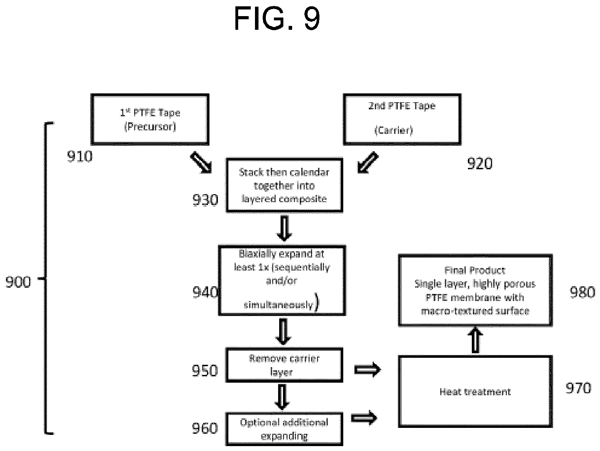

The porous PTFE membranes are formed through a process where at least two PTFE membranes or tapes are stacked (FIG. 9; 930) and then calendered to form a layered composite (FIG. 9; 900). The layered composite includes at least one first PTFE membrane (the PTFE precursor membrane; FIG. 9; 910) that is reversibly adhered to at least one second PTFE membrane or tape that is the PTFE carrier membrane or tape (FIG. 9; 920). The PTFE precursor membrane is designed to be mechanically weaker and more expandable than the PTFE carrier membrane. In other words, the PTFE carrier membrane is mechanically stronger and less expandable than the PTFE precursor membrane).

The layered composite is then biaxially co-expanded (sequentially and/or simultaneously (FIG. 9; 940)). After biaxial co-expansion (FIG. 9; 950), the PTFE carrier membrane layer is removed. The single layer porous PTFE membrane (i.e., derived from the PTFE precursor membrane layer) remaining after the removal of the PTFE carrier membrane may optionally be subjected to at least one additional expansion step (FIG. 9; 960). The expansion may be uniaxial, radial, biaxial or any combination thereof. In some embodiments, the highly porous, single layer PTFE membrane is subjected to at least one additional expansion step after the separation of the PTFE precursor membrane from the PTFE carrier membrane layer (FIG. 9; 960). The additional biaxial expansion step(s) may be sequential or simultaneous. The highly porous, single layer PTFE membrane is subjected to a final heat treatment that is sufficient to at least partially or fully sinter the porous, single layer PTFE membrane (FIG. 9; 970) to arrive at the final product (e.g., article) (FIG. 9; 980).

In some embodiments, the layered composite is first expanded in the machine direction followed by at least one expansion in the transverse direction (i.e., sequential expansion). In some embodiments, the layered composite is first expanded in the machine direction at an expansion ratio ranging from about 1.1:1 to about 1.7:1 followed by at least one expansion in the transverse direction.

In some embodiments, the process may further include at least one densification step. The densification step may occur after (e.g., immediately after) the removal of the carrier layer or it may occur after the one or more additional expansion steps of the single layer porous PTFE membrane. In some embodiments, the densification step may occur before, during, or after the heat treatment step. In some embodiments, densification may occur by a plate press and/or by calendaring the membrane between rollers. In some embodiments, the densification step(s) may also include heating during, before, or after expansion.

The PTFE starting materials (precursor membrane/tape and carrier membrane/tape) used for forming the present PTFE membranes can be of any type of PTFE resin which lends itself to the formation of fibrils and nodes upon expansion so long at the PTFE precursor membrane is weaker in the machine direction (MD) and/or transverse direction (TD) than the PTFE carrier membrane. It is to be understood that throughout this disclosure, the term "PTFE" is used for convenience, but is meant to include not only polytetrafluoroethylene, but also expanded PTFE, modified PTFE, expanded modified PTFE, and expanded copolymers of PTFE, such as, for example, described in U.S. Patent No. 5,708,044 to Branca, U.S. Patent No. 6,541,589 to Baillie, U.S. Patent No. 7,531,611 to Sabol et al., U.S. Patent No. 8,637,144 to Ford, and U.S. Patent No. 9,139,669 to Xu et al. As used herein, the term "PTFE" is also meant to include any non-fluoropolymer that can be expanded into a membrane having a node and fibril microstructure and that meets the matrix tensile strengths in the machine and transverse directions as described above. In addition, the term "PTFE" may be used for both the precursor and carrier membranes described herein, but are done so for convenience and is meant to include the broader definition of "PTFE" in this disclosure.

In one exemplary embodiment, the PTFE starting materials may be a PTFE homopolymer or a blend of PTFE homopolymers. In another embodiment, the PTFE starting materials may be a blend of a PTFE homopolymer and a PTFE copolymer in which comonomer units are not present in amounts that cause the copolymer to lose the non-melt processable characteristics of a pure homopolymer PTFE. Examples of suitable comonomers in the PTFE copolymer include, but are not limited to, olefins such as ethylene and propylene; halogenated olefins such as hexafluoropropylene (HFP), vinylidene fluoride (VDF), and chlorofluoroethylene (CFE); perfluoroalkyl vinyl ether (PPVE), and perfluoro sulfonyl vinyl ether (PSVE). In yet another embodiment, the first and/or second PTFE membranes are formed from a blend of high molecular weight PTFE homopolymer and a lower molecular weight modified PTFE polymer.

In another embodiment, the precursor membrane and/or the carrier layer membrane may be formed of other fibrillatable and expandable materials other than PTFE such as poly(ethylene-co-tetrafluoroethylene) (ETFE), ultrahigh molecular weight polyethylene (UHMWPE), polyethylene, polyparaxylylene (PPX), polylactic acid (PLLA), polyethylene (PE), expanded polyethylene (ePE), and any combination or blend thereof.

The PTFE membranes are formed by blending fibrillatable/paste-processable PTFE fine resin particles with a lubricant. Non-limiting examples of lubricants for use herein include light mineral oil, aliphatic hydrocarbons, aromatic hydrocarbons, and halogenated hydrocarbons. The resulting mixture of PTFE resin particles and lubricant may be formed into a cylindrical pellet and extruded through a die at a reduction ratio from about 10:1 to about 150:1, or from about 25:1 to about 90:1 to form a tape. The tape may then be calendered between rolls to a desired thickness at a calendering ratio from about 1.1:1 to about 50:1, or from about 1.1:1 to about 20:1 to form the PTFE membranes/tapes (precursor membranes and/or the carrier membrane/tape) .

In at least one embodiment, the PTFE precursor membrane is formed without a drying step and is layered with the second PTFE membrane (carrier membrane) in a wet state (FIG. 9, 903). It is within the purview of the disclosure to dry either the PTFE membrane (pre-calendering) or the first PTFE precursor membrane (post calendering) prior to layering with the PTFE carrier membrane/tape.

Please note that although reference is made herein with respect to a first PTFE membrane/tape (i.e., PTFE precursor layer) and a second PTFE membrane/tape (PTFE carrier layer) for ease of discussion, a greater number of PTFE membranes/tapes may be included in the methods described herein so long as processing aid(s) are removed and the final product comprises the features of the porous PTFE membranes.

The second PTFE membrane/tape (carrier membrane/tape) may be formed by blending a second suitable PTFE starting material (fibrillatable/paste processable resin particles) with a lubricant. Non-limiting examples of lubricants for use herein include light mineral oil, aliphatic hydrocarbons, aromatic hydrocarbons, and halogenated hydrocarbons. The resulting mixture may be formed into a cylindrical pellet and ram extruded through a die at a reduction ratio from about 10:1 to about 150:1, or from about 50:1 to about 120:1 to form a tape. The tape may then be calendered between rolls to a desired thickness at a calendering ratio from about 1.1 to about 20:1 or from about 1.1: to about 10:1. The calendered tape may then be expanded in one or more directions and dried to remove the lubricant. For example, the calendered tape may be expanded in a longitudinal and/or a transverse direction at an expansion ratio from about 1.1:1 to about 20:1 or about 1.1:1 to about 10:1. It is to be appreciated that the second PTFE tape/membrane may be formed without drying the PTFE tape and/or membrane and may be layered with the first PTFE membrane (precursor) in a wet state. In some embodiments, the PTFE carrier membrane/tape may be uniaxially or biaxially expanded prior contacting the PTFE precursor membrane/tape. In another embodiment, the PTFE carrier membrane/tape may be expanded at least once in the transverse direction prior to contacting the PTFE carrier membrane/tape to the PTFE precursor membrane/tape.

In forming the layered composite, the first PTFE membrane (precursor membrane) and the second PTFE membrane (carrier membrane) are positioned one on top of the other in a stacked configuration. The first and second PTFE membranes are positioned in a stacked configuration, for example, by simply laying the membranes on top of each other. The stacked product is then subjected to a sufficient amount of pressure (*e.g.,* calendaring and/or a plate press) and/or heat to reversibly bond the PTFE precursor layer to the PTFE carrier layer, thereby forming a layered composite. In some embodiments, calendering is used to form the layered composite. The thickness of the stacked membranes may be reduced to a desired thickness when forming the layered composite. However, the bonding strength between the PTFE precursor layer and the PTFE carrier layer should be of sufficient strength to facilitate subsequent co-expansion step(s) (FIG. 9, 940) yet still provide the ability to separate the PTFE carrier layer from the PTFE precursor layer after biaxially expanding the layered composite (950). As such, the reduction in thickness (e.g., calendaring) when reversibly bonding the PTFE precursor layer to the PTFE carrier layer should be controlled to maintain the ability to remove the PTFE carrier layer after co-expanding the layered composite. In one embodiment, the thickness of the layered composite is reduced (relative to the thickness of the layered product prior to calendaring and/or pressing) by less than about 20%, less than about 15%, less than about 10%, less than about 5%, less than about 3%, less than about 1% or less than about 0.1 %. The thickness of the layered composite may range from about 0.01 mm to about 3.0 mm, from about 0.01 mm to about 2 mm, from about 0.03 mm to about 1.0 mm, from about 0.05 mm to about 0.7 mm, or from about 0.1 mm to about 0.5 mm.

The layered composite may be biaxially expanded sequentially or simultaneously. In one embodiment, the layered composite is co-expanded in the machine direction (MD) followed by at least one expansion in the transverse direction (TD). For instance, the layered composite may be stretched in the machine-direction at an average engineering strain rate from about 0.5%/sec to about 300%/sec, or from about 0.5%/sec to about 150%/sec and a stretch amount from about 10% to about 350% or from about 10% to about 300% and subsequently in the transverse direction at an average engineering strain rate from about 3% to about 600%, or from about 10% to about 400% and a stretch amount from about zero% to about 2000% or from about 1.0% to about 1600%, or vice versa (e.g., stretched first in the transverse direction and then stretched in the machine direction). In at least one embodiment, the layered product is biaxially expanded simultaneously at an average engineering strain rate from about 10%/sec to about 500%/sec, or from about 20%/sec to about 250%/sec and a stretch amount from about 10% to about 2000%.

The PTFE carrier layer membrane is then separated from the expanded layered composite and discarded (FIG. 9; 950). In some embodiments, mechanical force is used to separate the carrier layer from expanded layered composite. The remaining product (derived from the PTFE precursor layer) is a single layer, highly porous, free-standing PTFE membrane having macro-textured surfaces.

Although the present examples illustration the preparation of the PTFE precursor and/or carrier membrane using paste processing, it is envisioned that dry blending the fibrillation technology could also be used. In an alternative embodiment, the PTFE precursor membrane and/or the PTFE carrier membrane may be formed by blending fibrillating polymer particles in a manner such as is generally taught in U.S. Publication No. 2005/0057888 to Mitchell, et al., U.S. Publication No. 2010/0119699 to Zhong, et al., U.S. Patent No. 5,849,235 to Sassa, et al., U.S. Patent No. 6,218,000 to Rudolf, et al., or U.S. Patent No. 4,985,296 to

Mortimer. The uniaxial, biaxial, or radial expansion are generally described in U.S.

Patent No. 3,953,566 to Gore and U.S. Patent No. 4,478,665 to Hubis.

In another embodiment, the method further includes densifying the single layer, free standing porous PTFE membrane. In a further aspect, the densifying step is conducted before, during or after the at least one heat treatment.

Persons skilled in the art will readily appreciate that various aspects of the present disclosure can be realized by any number of methods and apparatus configured to perform the intended functions. It should also be noted that the accompanying drawing figures referred to herein are not necessarily drawn to scale, but may be exaggerated to illustrate various aspects of the present disclosure, and in that regard, the drawing figures should not be construed as limiting.

The invention of this application has been described above both generically and with regard to specific embodiments. It will be apparent to those skilled in the art that various modifications and variations can be made in the embodiments without departing from the scope of the disclosure. Thus, it is intended that the embodiments cover the modifications and variations of this invention provided they come within the scope of the appended claims and their equivalents.

**TEST METHODS**

It should be understood that although certain methods and equipment are described below, other methods or equipment determined suitable by one of ordinary skill in the art may be alternatively utilized.

Thickness

Membrane thickness was determined by placing the PTFE membrane between the two plates of a Heidenhain snap gauge (Heidenhain Corp., Schaumburg IL). Thinner samples (140 $\mu$m or less in thickness) were determined via SEM cross section.

Mass Per Area (Mass/Area)

The mass/area of the PTFE membrane was calculated by measuring the mass of a well-defined area of the sample using a scale. The sample was cut to a defined area using a die or any precise cutting instrument.

Density

The density was calculated by dividing the Mass per Area by Thickness.

Qualitative Image Analysis (QIA)

Qualitative image analysis was conducted to determine the average dimensions of various features of the porous PTFE membranes (macroscopic nodal aggregates, fibrils lengths, spacing between features, such as intra- and interspacing).

Macroscopic Nodal Agglomerate Intra- Spacing

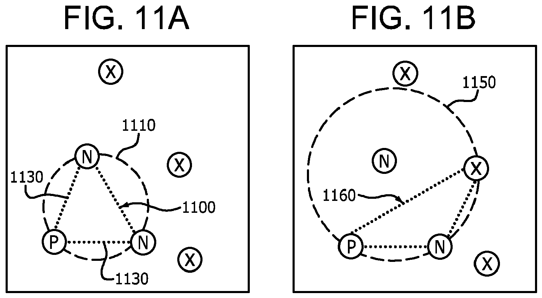

Macroscopic nodal agglomerate intra- spacing was determined by analyzing SEM images in ImageJ version 1.51h from the National Institute of Health (NIH) (see Schneider, C.A., Rasband, W.S., Eliceiri, K.W. "NIH Image to ImageJ: 25 years of image analysis". Nature Methods 9, 671-675, 2012 or Abramoff, M.D., Magalhaes, P.J., Ram, S.J. "Image Processing with ImageJ". Biophotonics International, volume 11, issue 7, pp. 36-42, 2004). The image scale was set based on the scale provided by the SEM image. Features were identified and isolated through a combination of thresholding based on size/shading and/or manual identification. Features less than 1% the area of the largest feature in the image were excluded from analysis. After isolating the features, a Delaunay Triangulation was performed to identify neighboring features. Lines were drawn between the nearest edges of neighboring features and measured for length to define spacing between neighboring features (see, e.g., FIG. 11A). Lines that were between 45 and 135 degrees from the horizontal were included in analysis. The projection of these lines in the vertical direction (orientation of the macroscopic nodal agglomerate(s) was taken to determine the intra- spacing.

As shown pictorially in FIG. 11A, the designated feature (P) is connected to neighboring solid features (N) to form a triangle 1100 where the circumcircle 1110 contains no solid features within. Solid features (X) designate the solid features that are not neighboring solid features to P. Thus, in the instance depicted in FIG. 11A, the feature spacing 1130 is the straight distance between the designated features (P), (N). In contrast, the circumcircle 1150 shown in FIG. 11B drawn from the triangle 1160 contains therein a feature (N), and as such, cannot be utilized to determine the feature spacing.

Macroscopic Nodal Agglomerate Inter- Spacing

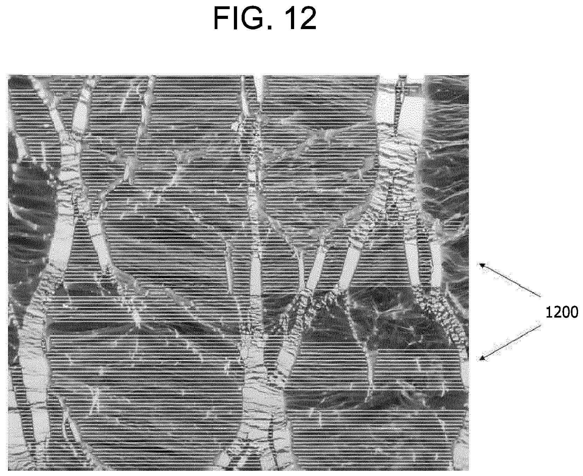

Macroscopic nodal agglomerate inter- spacing was determined by analyzing SEM images in ImageJ 1.51h from the National Institute of Health (NIH) (*supra*). The image scale was set based on the scale provided by the SEM image. Features were identified and isolated through a combination of thresholding based on size/shading and/or manual identification. Features less than 1% the area of the largest feature in the image were excluded from analysis. After isolating the features, the features were overlaid with a series of no less than 50 parallel (FIG. 12, 1200) and equally spaced lines in the direction perpendicular to the macro-agglomerate(s). Lines touching two nodes were isolated and measured for length to determine the average spacing of the macroscopic nodal agglomerate. The mean and median of the total dataset were measured (i.e., the overall mean and median from the entire dataset). To further characterize the distribution of the spacing between the macroscopic nodal agglomerate, features/distances that fell below the 75th percentile were excluded and then the average of the remaining features/distances (those between the 75th and 100th percentile; the top quartile) were averaged.

Matrix Tensile Strength (MTS)

To determine matrix tensile strength (MTS), a sample PTFE membrane/tape was cut in the longitudinal and transverse directions using ASTM D412 - Dogbone Die Type F (D412F) or ASTM D638 - Standard Test Method for Tensile Properties of Plastics (D638-5). Tensile break load was measured using an INSTRON® 5567 (Illinois Tool Works Inc., Norwood, MA) tensile test machine equipped with flat-faced grips and a "22 lb" (~100 N) load cell. The gauge length for the grips was set to 8.26 cm and the strain rate was 0.847 cm/s. After placing the sample in the grips, the sample was retracted 1.27 cm to obtain a baseline followed by a tensile test at the aforementioned strain rate. Two samples for each condition were tested individually and the average of the maximum load (i.e., the peak force) measurements was used for the MTS calculation. The longitudinal and transverse MTS were calculated using the following:

$$MTS = (maximum\ load/cross\ sectional\ area) \times (density\ of\ resin/density\ of\ the$$

$$membrane).$$

Optical Microscope Images

Optical microscopic images were generated using an Olympus SZX12 microscope at a magnification of 7x and 32x.

Scanning Electron Micrograph (SEM) Sample Imaging

SEM images were generated using a high resolution field emission cryogenic microscope (Hitachi S4700 FE-SEM).

ATEQ Airflow Measurement

The ATEQ airflow test measures laminar volumetric flow rates of air through membrane samples. Each membrane sample was clamped between two plates in a manner that seals an area of 2.99 cm$^2$ across the flow pathway. An ATEQ® (ATEQ Corp., Livonia, MI) Premier D Compact Flow Tester was used to measure airflow rate (L/hr) through each membrane sample by challenging it with a differential air pressure of 1.2 kPa (12 mbar) through the membrane.

It will be apparent to those skilled in the art that various modifications and variations can be made in the embodiments without departing from the scope of the disclosure. Thus, it is intended that the embodiments cover the modifications and variations of this invention provided they come within the scope of the appended claims and their equivalents.

*EXAMPLE 1*

**Preparation of the first PTFE Membrane (Membrane Precursor Layer)**

A first polytetrafluoroethylene (PTFE) membrane was prepared as follows. A blend of a high molecular weight polytetrafluoroethylene fine powder and a lower molecular weight modified polytetrafluoroethylene polymer was prepared in accordance with the teachings of U.S. Patent No. 5,814,405 to Branca et al. and then combined with 0.244 lb/lb of isoparaffinic hydrocarbon lubricant (ISOPAR™ K, Exxon, Houston, Texas). The resultant mixture was then blended, compressed into a cylindrical pellet, and thermally conditioned for 18 hours at a temperature of 25°C. The cylindrical pellet was then extruded through a rectangular orifice die at a reduction ratio of 40:1 to form a tape. The tape was then calendered between rolls at a calendering ratio of 1.2:1 and then layered with a second identical tape with a ratio of 1.1:1 to form the first PTFE membrane (precursor membrane).

**Preparation of the second PTFE membrane (Carrier Layer)**

A second PTFE membrane was prepared as follows. A fine powder of polytetrafluoroethylene polymer made in accordance with the teachings of U.S. Patent No. 4,576,869 to Malhotra et al. was combined with 0.185 lb/lb of lubricant (ISOPAR™ K, Exxon, Houston, Texas). The resultant mixture was then blended, compressed into a cylindrical pellet, and then thermally conditioned for 8 hours at a temperature of 49°C. The cylindrical pellet was then extruded through a rectangular orifice die at a reduction ratio of 78:1 to form a tape. The tape was then calendered between rolls at a calendering ratio of 2.8:1 to form a PTFE carrier membrane.

**Multilayer Processing (co-expansion)**

The PTFE precursor membrane was stacked on top of the PTFE carrier membrane and the layered product was calendered between rolls and reduced in thickness of 3-5 % (relative to the thickness of the stacked membranes prior to calendering). The resultant layered laminate was dried at a temperature of 180°C to remove the lubricant. The dried laminate was then expanded at 300°C in the machine direction (MD) at an average engineering strain rate of 6%/second and a stretch amount of 20%. The MD expanded laminate was then further expanded in the transverse direction (TD) at a ratio of 3:1 at an average engineering strain rate of 75 %/second and at a temperature of about 300°C. The PTFE carrier layer was then mechanically separated from the first PTFE membrane layer (what began as the precursor membrane). The remaining first PTFE membrane layer (derived from precursor membrane) was then biaxially expanded at 300°C in the machine direction (MD) at a ratio of 2:1 at 75%/sec and in the transverse direction (TD) at a ratio of 2:1 at 75%/sec. The resulting single layer, highly porous PTFE membrane was then subjected to a heat treatment at 360°C for 60 seconds.

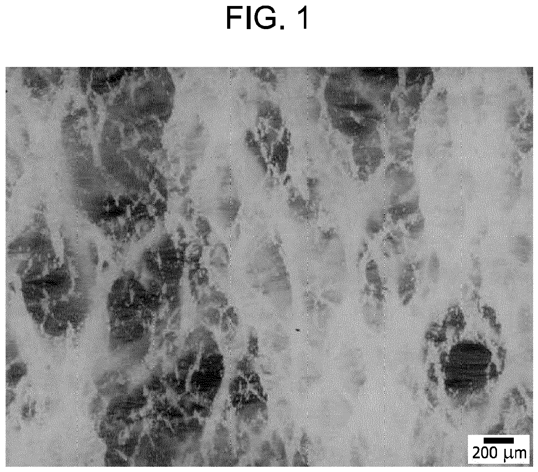

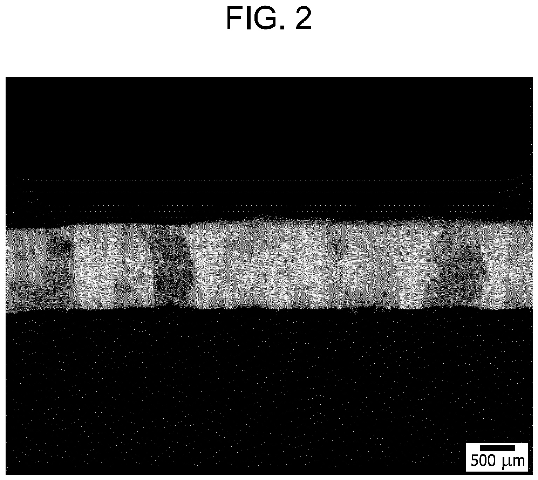

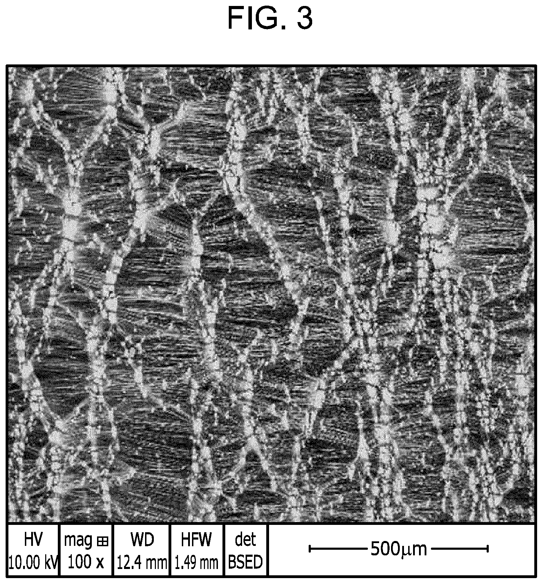

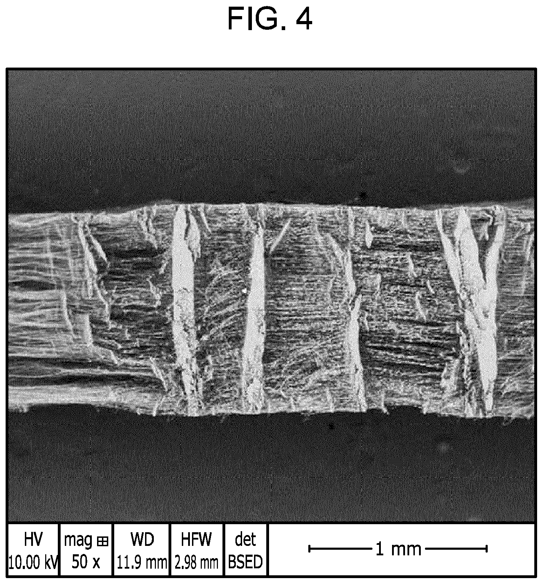

The single layer, highly porous PTFE membrane had a strongly pronounced 3-dimensional structure with nodes extending from the first surface to the second surface (through the z-axis) (Table 1). An optical microscopic image of the PTFE membrane illustrates the macro-textured surface due to the presence of the macroscopic nodal aggregates (FIG. 1, top view; FIG. 2, cross-section). SEM images (FIG. 3, top view; FIG. 4, cross-section) show the macroscopic nodal aggregates. Quantitative image analysis was conducted as described above and reported in Tables 2 and 3.

## *EXAMPLE 2*

### Preparation of the first PTFE Membrane (Membrane Precursor Layer)

A first polytetrafluoroethylene (PTFE) membrane was prepared as follows. A blend of a high molecular weight polytetrafluoroethylene fine powder and a lower molecular weight modified polytetrafluoroethylene polymer was prepared in accordance with the teachings of U.S. Patent No. 5,814,405 to Branca et al. and then combined with 0.244 lb/lb of lubricant (ISOPAR™ K, Exxon, Houston, Texas). The resultant mixture was blended and thermally conditioned for 18 hours at a temperature of 25°C. The thermally conditioned mixture was compressed into a cylindrical pellet. The cylindrical pellet was then extruded through a rectangular orifice die at a reduction ratio of 78:1 to form a tape. The tape was then calendered between rolls at a calendering ratio of 3:1 to form the first PTFE membrane (i.e., the PTFE precursor membrane).

### Preparation of the Second PTFE Membrane (Carrier Layer)

A second PTFE membrane was prepared as follows. A fine powder of polytetrafluoroethylene polymer made in accordance with the teachings of U.S. Patent No. 4,576,869 to Malhotra et al. was blended with 0.227 lb/lb of lubricant (Isopar™ K, Exxon, Houston, Texas). The blended mixture was compressed into a cylindrical pellet and then thermally conditioned for 8 hours at a temperature of 49°C. The thermally conditioned cylindrical pellet was then extruded through a rectangular orifice die at a reduction ratio of 78:1 to form a tape. The tape was then calendered between rolls at a calendering ratio of 3:1 to form the second PTFE membrane (i.e., the PTFE carrier membrane).

### Multilayer Processing (co-expansion)

The PTFE precursor membrane was stacked on top of PTFE carrier layer membrane to form a layered product, which was subsequently calendered between rolls with a suitable amount of pressure to gently bond the layers together without significantly reducing the thickness of the resulting laminate. The laminate was then dried at a temperature of 180°C to remove the lubricant. The laminate was then sequentially expanded as follows: The dried laminate was expanded at 330°C in the machine direction (MD) at an average engineering strain rate of 4%/second and a stretch amount equal to 20%. The MD expanded laminate was then expanded in the transvers direction (TD) at a ratio of 2:1 and at an average engineering strain rate of 50 %/second at a temperature of about 330°C.

The sequentially expanded laminate was then biaxially expanded (simultaneously) in the machine direction (MD) at a ratio of 2:1 and in the transverse direction (TD) at a ratio of 6:1 at 200%/sec at 300°C.

The second PTFE membrane layer (i.e., the PTFE carrier layer) was then mechanically separated from the first PTFE membrane layer (i.e., the PTFE precursor membrane). The single layer, highly porous PTFE membrane was then heat-treated at 360°C for not more than 180 seconds.

The single layer, highly porous membrane had a strongly pronounced 3-dimensional structure with nodes extending from the first surface through to the second surface (through the z-axis) (Table 1).

## *EXAMPLE 3*

### Preparation of the First PTFE Membrane (Membrane Precursor Layer)

A first polytetrafluoroethylene (PTFE) membrane (i.e., the PTFE precursor membrane layer) was prepared as follows. A blend of a high molecular weight polytetrafluoroethylene fine powder and a lower molecular weight modified polytetrafluoroethylene polymer was prepared in accordance with the teachings of U.S. Patent No. 5,814,405 to Branca et al. and then blended with 0.244 lb/lb of lubricant (ISOPAR™ K, Exxon, Houston, Texas). The blended product was then compressed into a cylindrical pellet and thermally conditioned for 18 hours at a temperature of 25°C. The thermally conditioned cylindrical pellet was then extruded through a rectangular orifice die at a reduction ratio of 40:1 to form a tape. The tape was then calendered between rolls at a calendering ratio of 1.2:1 and then layered with a second identical tape with a ratio of 1.1:1 to form the first PTFE membrane (*i.e.* the PTFE precursor membrane).

**Preparation of the Second PTFE Membrane (Carrier Layer)**

A second PTFE membrane (*i.e., the PTFE carrier membrane*) was prepared as follows. A fine powder of polytetrafluoroethylene polymer made in accordance with the teachings of U.S. Patent No. 4,576,869 to Malhotra et al. was blended with 0.185 lb/lb of lubricant (ISOPAR™ K, Exxon, Houston, Texas). The blended mixture was compressed into a cylindrical pellet and thermally conditioned for 8 hours at a temperature of 49°C. The thermally conditioned cylindrical pellet was then extruded through a rectangular orifice die at a reduction ratio of 78:1 to form a tape. The tape was then calendered between rolls at a calendering ratio of 2.8:1.

**Multilayer Processing (co-expansion)**

The PTFE precursor membrane was stacked on the PTFE carrier membrane for form a layered product. The layered product was then calendered between rolls with a suitable amount of pressure to lightly bond the two PTFE membranes into a laminate without any significant reduction in thickness. The resultant laminate was the dried at a temperature of 180°C to remove the lubricant. The dried laminate was then expanded at 320°C in the machine direction (MD) at an average engineering strain rate of 1.02 %/second and a stretch amount equal to 60% (i.e., a ratio of 1.6:1 MD). The MD expanded laminate was then expanded in the transvers direction (TD) at a ratio of 4:1 at an average engineering strain rate of 75 %/second at a temperature of about 300°C. The second layer (i.e., the PTFE carrier membrane) was then mechanically separated from the first layer (*i.e.,* the PTFE precursor membrane). The resulting product was a single layered, highly porous PTFE membrane (derived from precursor membrane). The resultant single layer, highly porous PTFE membrane was then heat-treated at 350°C for not more than 120 seconds.

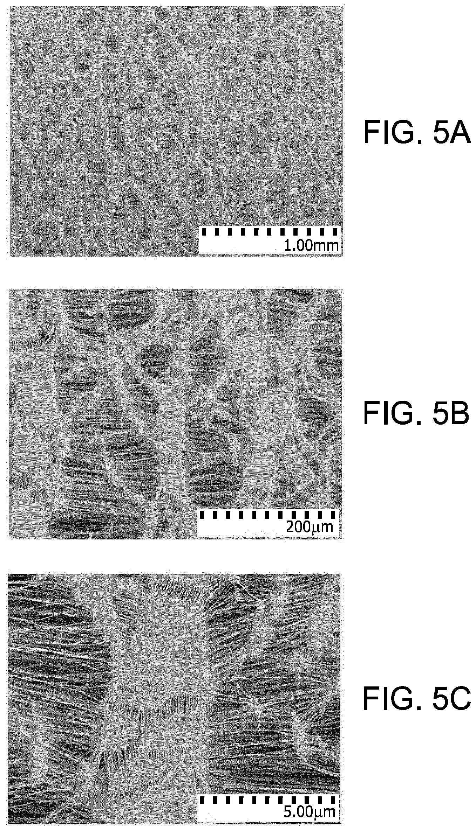

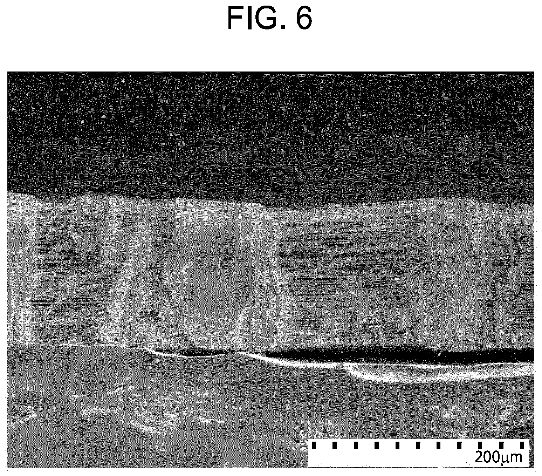

The single layer, highly porous PTFE membrane had a strongly pronounced three-dimensional structure with nodes extending through the z-axis (Table 1). SEM images at different magnifications show the macroscopic nodal aggregates (FIGS. 5A, 5B, and 5C, top view; FIG. 6, cross-section). Quantitative image analysis was conducted as described above and reported in Tables 2 and 3.

***EXAMPLE 4***

A first polytetrafluoroethylene (PTFE) membrane (*i.e.,* the precursor membrane) was prepared as follows. A blend of a high molecular weight polytetrafluoroethylene fine powder and a lower molecular weight modified polytetrafluoroethylene polymer was prepared in accordance with the teachings of U.S. Patent No. 5,814,405 to Branca et al. and then blended with 0.244 lb/lb of lubricant (ISOPAR™ K, Exxon, Houston, Texas). The blended product was then compressed into a cylindrical pellet and thermally conditioned for 18 hours at a temperature of 25°C. The thermally conditioned cylindrical pellet was then extruded through a rectangular orifice die at a reduction ratio of 40:1 to form a tape. The tape was then calendered between rolls at a calendering ratio of 1.2:1 and then layered with a second identical tape with at a ratio of 1.1:1 to form the first PTFE membrane (the precursor PTFE membrane).

**Preparation of the Second PTFE Membrane (Carrier Layer)**

A second PTFE membrane (carrier layer) was prepared as follows. A fine powder of polytetrafluoroethylene polymer made in accordance with the teachings of U.S. Patent No. 4,576,869 to Malhotra et al. was blended with 0.185 lb/lb of lubricant (ISOPAR™ K, Exxon, Houston, Texas). The blended mixture was compressed into a cylindrical pellet and thermally conditioned for 8 hours at a temperature of 49°C. The thermally conditioned cylindrical pellet was then extruded through a rectangular orifice die at a reduction ratio of 78:1 to form a tape. The tape was then calendered between rolls at a calendering ratio of 2.8:1 to form a PTFE carrier membrane.

**Multilayer Processing (co-expansion)**

The PTFE precursor membrane was stacked on the PTFE carrier membrane for form a layered product. The layered product was then calendered between rolls with a suitable amount of pressure to lightly bond the two membranes into a laminate without any significant reduction in thickness. The resultant laminate was dried at a temperature of 180°C to remove the lubricant. The dried laminate was then expanded at 320°C in the machine direction (MD) at an average engineering strain rate of 0.29%/second and a stretch amount equal to 20%. The MD expanded laminate was then expanded in the transvers direction (TD) at a ratio of 4:1 and at an average engineering strain rate of 75 %/second at a temperature of about 300°C. The second PTFE membrane (i.e., the carrier membrane) was then mechanically separated from the first PTFE membrane. The resulting product was a single layered, highly porous PTFE membrane (derived from the PTFE precursor membrane). The single layer, highly porous PTFE membrane was then heat-treated at 350°C for not more than 120 seconds.

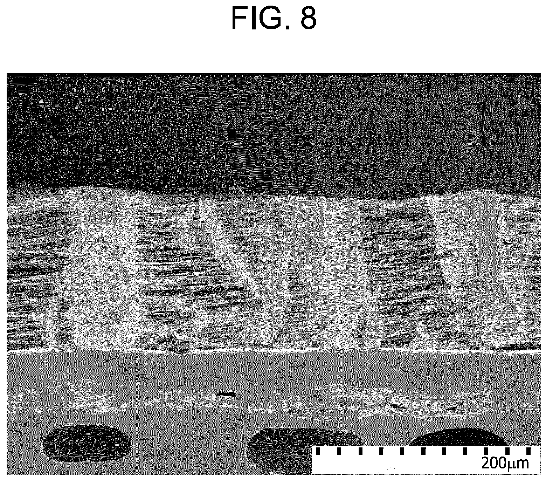

The single layer, highly porous PTFE membrane had a strongly pronounced 3 dimensional structure with nodes extending through the z-axis (Table 1). SEM images at different magnifications show the macroscopic nodal aggregates (FIGS. 7A, 7B, 7C, and 7D, top view; FIG. 8, cross-section). FIG. 7D clearly shows that the macroscopic nodal aggregates are formed of a plurality of dense PTFE nodes. Quantitative image analysis was conducted as described above and is reported in Tables 2 and 3.

Table 1. Membrane Properties

| Membrane Sample | Matrix Tensile Strength (MD) (psi) [MPa] | Matrix Tensile Strength (TD) (psi) [MPa] | Membrane Thickness ($\mu$m) (contact) | Bulk Density (g/cm3) | Mass per area (g/m$^2$) | Porosity (%) | ATEQ Airflow (L/hr @ 12 mbar [1.2 kPa] over 2.99 cm$^2$) |
|---|---|---|---|---|---|---|---|
| Example 1 | 640 [4.41] | 775 [5.34] | 1200 | 0.248 | 298 | 75 | 1450 |
| Example 2 | ND | ND | 140 | ND | ND | ND | 1450 |
| Example 3 | 1425 [9.83] | 1209 [8.34] | 125 | 0.394 | 56.0 | 61 | 420 |
| Example 4 | 1078 [7.43] | 1260 [8.69] | 145 | 0.496 | 70.5 | 50 | 550 |
| ND = Not determined/measured. | | | | | | | |

Table 2. Quantitative Image Analysis - Void and Node Data

| Material ID | Void Information | | Node Information | |
|---|---|---|---|---|
| | Magnification | % Voids | Magnification | % Nodes |
| Example 1 | 100 | 37.1 | 50 | 24.0 |
| Example 3 | 500 | 37.7 | 100 | 29.5 |
| Example 4 | 500 | 39.4 | 50 | 30.6 |

Table 3. Quantitative Image Analysis - Macroscopic Nodal Aggregates (MNAs)

| Material ID | Macroscopic Nodal Aggregate Information | | | | | | Other |
|---|---|---|---|---|---|---|---|
| | Magnification | Avg. Inter-River Spacing ($\mu$m) | Median Inter-River Spacing ($\mu$m) | 75th-100th Percentile (top quartile) Average spacing ($\mu$m) | Magnification | Avg. Intra-River Spacing ($\mu$m) | % Fibrils |
| Example 1 | 50 | 329.5 | 179.0 | 884.0 | 100 | 53.4 | 38.9 |
| Example 3 | 250 | 47.4 | 33.4 | 114.4 | 250 | 26.7 | 32.8 |
| Example 4 | 100 | 104.8 | 73.1 | 249.6 | 100 | 76.7 | 30.0 |

Features of the present invention are disclosed in the following Statements:

1. A porous polytetrafluoroethylene (PTFE) membrane comprising:

a) a first side and a second side,
b) a thickness of at least 25 $\mu$m;
c) a bulk density of 1.0 g/cm3 or less;
d) a porosity of at least 50%;
e) an airflow rate at least 200 L/hour (L/hr) as measured under a differential pressure of 12 millibar (1.2 kPa) over a surface area of approximately 2.99 cm2; and
f) a macro-textured surface on said first or said second side due to the presence of a plurality of spaced macroscopic nodal aggregates within the porous membrane,

wherein adjacent macroscopic nodal aggregates are connected by a population of long PTFE fibrils, said macroscopic nodal aggregates comprising a plurality of dense PTFE nodes having a density ranging from 2.0 g/mol to 2.2 g/mol;
wherein;

i) the average distance between the macroscopic nodal aggregates is at least 30 $\mu$m;
ii) the top quartile average distance between the macroscopic nodal aggregates is at least 100 $\mu$m; and
iii) an average width of the spaced macroscopic nodal aggregates ranging from 10 $\mu$m to 200 $\mu$m;

wherein at least a portion of the plurality of the spaced macroscopic nodal aggregates extend from the first side to the second side of the porous PTFE membrane; and
wherein the PTFE membrane is a single layer and is free-standing.

2. The porous PTFE membrane of Statement 1, wherein a majority of the macroscopic nodal aggregates extend from the first side to the second side of the porous PTFE membrane.

3. The porous PTFE membrane of Statement 1 or Statement 2, wherein the macroscopic nodal aggregates have a density that is less than the density of the PTFE nodes.

4. The porous PTFE membrane of any one of Statements 1-3, wherein the macroscopic nodal aggregates form strands on said first or said second side and have a length of at least 0.5 cm in length.

5. The porous PTFE membrane of Statement 4, wherein the strands comprise one or more microscopic gaps connected by a population of short PTFE fibrils that are less than 120 $\mu$m in length.

6. The porous PTFE membrane of any one of Statements 1-5, wherein the porous PTFE membrane is substantially symmetric from said first side to said second side.

7. An article comprising the porous PTFE membrane of any one of Statements 1-6.

8. The article of Statement 7, wherein the article is a garment, a vent, a filter, an implantable medical device, a scaffold for tissue in-growth, a scaffold for growing prokaryotic or eukaryotic cells, a scaffold for growing spores, a scaffold for growing plants.

9. A method of making a single layer, free-standing, porous polytetrafluorethylene (PTFE) membrane having a macro-textured surface comprising:

a) providing

i) a first layer comprising a first PTFE membrane having a matrix tensile strength of less than 800 pounds force per square inch (psi) (5.52 MPa) in both the machine direction and the transverse direction; and
ii) a second layer comprising a second PTFE membrane having a matrix tensile strength greater than 800 psi (5.52 MPa) in both the machine direction and the transverse direction;

b) stacking the first PTFE membrane on top of the second PTFE membrane;
c) applying a suitable amount of pressure, heat or combination thereof to non-permanently bond said first PTFE membrane to said second PTFE membrane to form a layered product;
d) expanding the layered product at least once in the machine direction and at least once in the transverse direction;

e) separating the second layer from said first layer; wherein the first layer is a single layer porous PTFE membrane; and

f) subjecting the single layer porous PTFE membrane to at least one heat treatment under suitable conditions to at least partially sinter said single layer porous PTFE membrane.

10. The method according to Statement 9, comprising subjecting the single layer porous PTFE membrane to at least one additional expanding step.

11. The method according Statement 10, wherein said at least one additional expanding step comprises biaxial expansion, uniaxial expansion, radial expansion or any combination thereof.

12. The method according to any one of Statements 9-11, wherein said expanding step d) comprises a first machine direction expansion prior to a first transverse expansion.

13. The method according to any one of Statements 9-12, wherein said first machine direction expansion comprises an expansion ratio from about 1.1:1 to about 1.7:1.

14. The method according to any one of Statements 9-13, wherein said step d) or step e) comprises biaxial expansion, uniaxial expansion, radial expansion or any combination thereof.

15. The method according to any one of Statements 9-14, wherein said biaxial expansion is sequential biaxial expansion, simultaneous biaxial expansion or a combination thereof.

16. The method according to any one of Statements 9-15, wherein the carrier layer is subjected to at least one uniaxial, biaxial or radial expansion step prior to stacking the carrier layer on the precursor layer.

17. The method of any one of Statements 9-16, wherein said heat treatment comprises a temperature of 345oC to 390oC for no more than 10 minutes.

18. The method of any one of Statements 9-17, comprising densifying the single layer porous PTFE membrane.

19. The method of Statement 18, wherein said densifying occurs before, during or after said at least one heat treatment.

20. The method according to any one of Statements 1 to 19, comprising contacting the heat-treated single layer porous membrane with at least one coating composition.

21. The method according to any one of Statements 1-20, comprising contacting the heat-treated single layer porous membrane with a surface modification treatment.

22. The method according to any one of Statements 1-21, comprising laminating or bonding the heat-treated single layer porous membrane to at least one additional material.

23. The method of Statements 22, wherein said at least one additional material is not PTFE.

**Claims**

1. A porous polytetrafluoroethylene (PTFE) membrane comprising:

   a) a first side and a second side,
   b) a thickness of at least 25 $\mu$m;
   c) a bulk density of 1.0 g/cm$^3$ or less;
   d) a porosity of at least 50%;
   e) an airflow rate at least 200 L/hour (L/hr) as measured under a differential pressure of 12 millibar (1.2 kPa) over a surface area of approximately 2.99 cm$^2$; and
   f) a macro-textured surface on said first or said second side due to the presence of a plurality of spaced macroscopic nodal aggregates within the porous membrane,

wherein adjacent macroscopic nodal aggregates are connected by a population of long PTFE fibrils, said macroscopic nodal aggregates comprising a plurality of dense PTFE nodes having a density ranging from 2.0 g/mol to 2.2 g/mol;

wherein;

    i) the average distance between the macroscopic nodal aggregates is at least 30 μm;
    ii) the top quartile average distance between the macroscopic nodal aggregates is at least 100 μm; and
    iii) an average width of the spaced macroscopic nodal aggregates ranging from 10 μm to 200 μm;

wherein at least a portion of the plurality of the spaced macroscopic nodal aggregates extend from the first side to the second side of the porous PTFE membrane; and

wherein the PTFE membrane is a single layer and is free-standing.

2. The porous PTFE membrane of claim 1, wherein a majority of the macroscopic nodal aggregates extend from the first side to the second side of the porous PTFE membrane.

3. The porous PTFE membrane of claim 1 or claim 2, wherein the macroscopic nodal aggregates have a density that is less than the density of the PTFE nodes.

4. The porous PTFE membrane of any one of claims 1-3, wherein the macroscopic nodal aggregates form strands on said first or said second side and have a length of at least 0.5 cm in length.

5. The porous PTFE membrane of claim 4, wherein the strands comprise one or more microscopic gaps connected by a population of short PTFE fibrils that are less than 120 μm in length.

6. The porous PTFE membrane of any one of claims 1-5, wherein the porous PTFE membrane is substantially symmetric from said first side to said second side.

7. An article comprising the porous PTFE membrane of any one of claims 1-6.

8. The article of claim 7, wherein the article is a garment, a vent, a filter, an implantable medical device, a scaffold for tissue in-growth, a scaffold for growing prokaryotic or eukaryotic cells, a scaffold for growing spores, a scaffold for growing plants.

# FIG. 1

200 μm

# FIG. 2

# FIG. 3

| HV | mag ⊞ | WD | HFW | det | |
|---|---|---|---|---|---|
| 10.00 kV | 100 x | 12.4 mm | 1.49 mm | BSED | ⊢————500μm————⊣ |

# FIG. 4

| HV | mag ⊞ | WD | HFW | det | |
|---|---|---|---|---|---|
| 10.00 kV | 50 x | 11.9 mm | 2.98 mm | BSED | ├────── 1 mm ──────┤ |

FIG. 5A

FIG. 5B

FIG. 5C

# FIG. 6

200μm

FIG. 7A

1.00mm

FIG. 7B

200μm

FIG. 7C

50μm

FIG. 7D

50μm

# FIG. 8

200μm

# FIG. 9

| 1st PTFE Tape (Precursor) | | 2nd PTFE Tape (Carrier) |

910

920

900

Stack then calendar together into layered composite — 930

Biaxially expand at least 1x (sequentially and/or simultaneously) — 940

Final Product
Single layer, highly porous PTFE membrane with macro-textured surface — 980

Remove carrier layer — 950

Heat treatment — 970

Optional additional expanding — 960

# FIG. 10

# FIG. 11A

# FIG. 11B

FIG. 12

Europäisches
Patentamt

European
Patent Office

Office européen
des brevets

# EUROPEAN SEARCH REPORT

Application Number

EP 23 20 9994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 106 496 A2 (GORE & ASS [US]) 25 April 1984 (1984-04-25) * examples 1,2 * | 1-8 | INV. B01D67/00 B01D46/54 B01D69/02 B01D71/36 |
| X | US 6 042 666 A (KARWOSKI THEODORE [US] ET AL) 28 March 2000 (2000-03-28) * example 3 * | 1-8 | |
| X | KR 2012 0007743 A (WOONGJIN CHEMICAL CO LTD [KR]) 25 January 2012 (2012-01-25) * paragraph [0041] – paragraph [0055] * | 1-8 | |

TECHNICAL FIELDS
SEARCHED      (IPC)

B01D

The present search report has been drawn up for all claims

| Place of search | Date of completion of the search | Examiner |
|---|---|---|
| Munich | 23 January 2024 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 9994

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2024

| Patent document cited in search report | | Publication date | Patent family member(s) | | Publication date |
|---|---|---|---|---|---|
| EP 0106496 | A2 | 25-04-1984 | DK | 410383 A | 11-03-1984 |
| | | | EP | 0106496 A2 | 25-04-1984 |
| | | | ES | 8502637 A1 | 16-01-1985 |
| | | | FI | 833179 A | 11-03-1984 |
| | | | PT | 77321 A | 01-10-1983 |
| US 6042666 | A | 28-03-2000 | US | 5824050 A | 20-10-1998 |
| | | | US | 6042666 A | 28-03-2000 |
| KR 20120007743 | A | 25-01-2012 | NONE | | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3953566 A, Gore
- US 4902423 A, Bacino
- US 5814405 A, Branca
- US 5476589 A, Bacino
- US 6342294 B, Ruefer
- US 20160367947 A1, Hollenbaugh
- US 7306841 B, Ruefer
- US 5708044 A, Branca
- US 6541589 B, Baillie
- US 7531611 B, Sabol
- US 8637144 B, Ford
- US 9139669 B, Xu
- US 20050057888 A, Mitchell
- US 20100119699 A, Zhong
- US 5849235 A, Sassa
- US 6218000 B, Rudolf
- US 4985296 A
- US 4478665 A, Hubis
- US 4576869 A, Malhotra

**Non-patent literature cited in the description**

- **SCHNEIDER, C.A ; RASBAND, W.S. ; ELICEIRI, K.W.** NIH Image to ImageJ: 25 years of image analysis. *Nature Methods,* 2012, vol. 9, 671-675
- **ABRAMOFF, M.D. ; MAGALHAES, P.J. ; RAM, S.J.** Image Processing with ImageJ. *Biophotonics International,* 2004, vol. 11 (7), 36-42